# FASCICULE DE BREVET EUROPEEN

(11) **EP 0 642 683 B1**
(45) Date de publication et mention de la délivrance du brevet: **03.12.1997**
(21) Numéro de dépôt: 93913077.9
(22) Date de dépôt: 27.05.1993
(51) Int. Cl.: G06F 11/00

(54) **PROCEDE ET PLATE-FORMES DE TEST POUR LE DEVELOPPEMENT D'UN CIRCUIT INTEGRE**
VERFAHREN UND TESTANLAGE ZUR ENTWICKLUNG EINER INTEGRIERTEN SCHALTUNG.
METHOD AND TEST PLATFORMS FOR THE DEVELOPMENT OF AN INTEGRATED CIRCUIT (ASIC)

(30) Priorité: 27.05.1992 FR 9206514
(43) Date de publication de la demande: 15.03.1995
(73) Titulaire: SGS-THOMSON MICROELECTRONICS S.A., 94253 Gentilly Cédex (FR)
(72) Inventeur: BONA, Mariano, F-38100 Grenoble (FR); COMTE, Pierre-Albert, F-38430 Moirans (FR); PHAM-MINH, Duc, F-38000 Grenoble (FR)
(74) Mandataire: Michelet, Alain
(86) Numéro de dépôt international: FR9300517
(87) Numéro de publication internationale: WO9324881

(56) Documents cités:
- FR-A- 2 534 057
- US-A- 4 617 663
- ELECTRO vol. 11, 1986, LOS ANGELES US pages 19/3 1-9 CHARLIE MELEAR 'Small evaluation boards provide flexibility and economy'
- EDN ELECTRICAL DESIGN NEWS. vol. 34, no. 6, 16 Mars 1989, NEWTON, MASSACHUSETTS US pages 131 - 144 ERIC P HORTON 'Construct a low-cost 8096-family development
- system'
- EDN ELECTRICAL DESIGN NEWS. vol. 35, no. 8, 12 Avril 1990, NEWTON, MASSACHUSETTS US pages 77 - 84 RICHARD A QUINNELL '16-bit debugging tools perform at low cost'

## Description

L'invention concerne le développement de circuits intégrés ayant un logiciel complexe à bord.

Les technologies actuelles de fabrication de semi-conducteurs permettent l'intégration d'un nombre de composants de plus en plus important sur une même plaquette de matériau semi-conducteur monocristallin (silicium, arséniure de gallium...).

On fabrique ainsi des circuits destinés à une grande diffusion (microprocesseur par exemple), des circuits semi-personnalisés comportant une mémoire programmable permettant leur utilisation dans des applications variées, des circuits intégrés spécifiques....

La publication de Charlie MELERAD intitulée "Small evaluation boards provide flexibility and economy" et référencée 8079 Electro / 86 and Mini / micro Northeast, 11 (1986) Conference Record, Los Angeles, CA, USA, décrit l'utilisation d'une carte d'évaluation utilisable pour le développement des circuits intégrés, à la place d'un émulateur, pour réaliser le test d'un logiciel existant. Il s'agit d'un outil destiné à être embarqué sur un produit standard, par exemple un microcontrôleur. Comme tout émulateur, il permet de tester un logiciel sur la base de l'état interne du circuit. La carte d'évaluation que cette publication décrit, est connectée à l'application finale par le biais d'un connecteur qui peut reprendre la connexion de sortie du circuit.

Après le chargement du programme, les données qui entrent dans la carte d'évaluation sont celles que fournit l'application. L'invention concerne plus particulièrement le développement de ce type de circuit désigné sous le terme ASIC (Application Specific Integrated Circuit).

Ces composants dont la réalisation est assistée par ordinateur, sont conçus à partir d'éléments connus, ce qui permet la réduction des temps de conception, et leur personnalisation permet l'optimisation du rapport prix/performance et de leur fiabilité.

Les circuits ASICs classiques et les techniques de développement de ces circuits actuellement connues et utilisées s'avérent insuffisantes car :
- On assiste actuellement, notamment dans le domaine des télécommunications et de l'informatique, à une évolution du cahier des charges des équipementiers qui utilisent des circuits intégrés. Cette évolution nécessite :
   . des performances de plus en plus importantes (calculs plus importants),
   . une intégration de plus en plus poussée (produits dédiés, consommation plus faible en vue d'une plus grande autonomie),
   . une fiabilité plus importante (télécommunications),
   . des prix très bas (concurrence),
- Par ailleurs, l'évolution de la technique permet de disposer de moyens de calcul et de simulation de plus en plus puissants, et de fabriquer des circuits intégrés à la fois plus denses (0.5 µm) et plus gros.

C'est la raison pour laquelle on assiste à :
. l'essor des circuits ASICs (Application Specific Integrated Circuit) permettant l'intégration sur un même circuit de plusieurs fonctions, la réduction des coûts, de l'encombrement, l'augmentation de la fiabilité, des performances et de l'autonomie des équipements ;
. l'augmentation de la complexité de ces circuits ASICs, incluant même des composants programmables, lorsque l'on veut réaliser des traitements importants qui ne peuvent être réalisés autrement (seulement en hardware). Ces traitements sont alors réalisés à l'aide de microprocesseurs ou de DSP (Digital Signal Processor) qui permettent, à l'aide d'un jeu d'instruction spécifique, de faire des calculs (addition, multiplication, décalages, etc...) et des entrées-sorties.

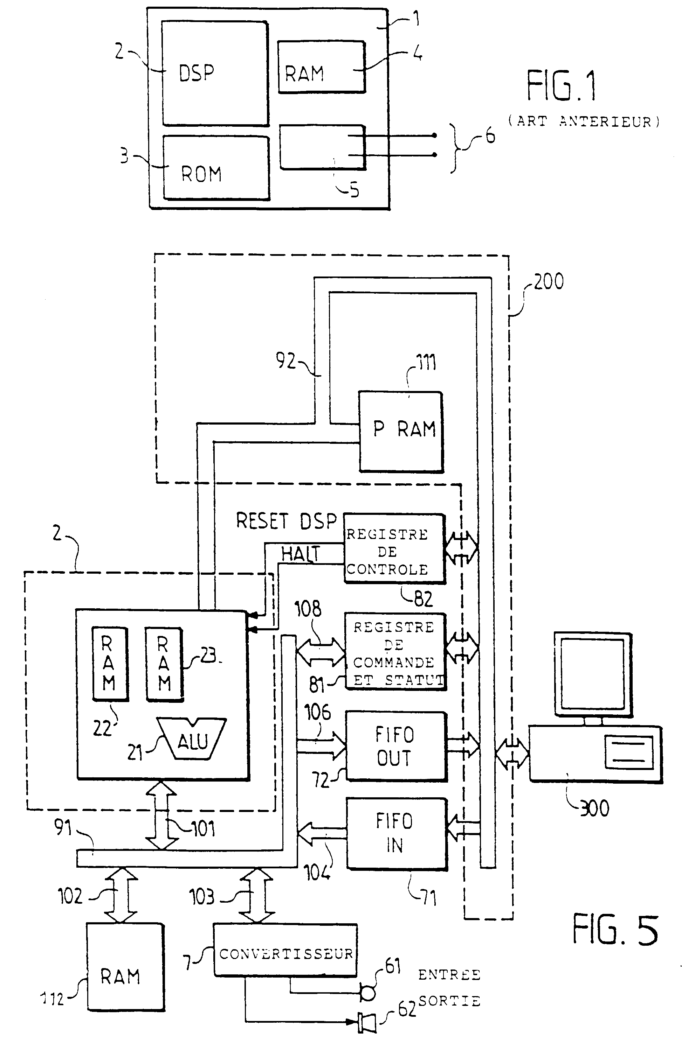

Ainsi on réalise actuellement des ASICs incorporant sur un même circuit (Figure 1) :
. un ou plusieurs composants programmables,
. de la mémoire vive (RAM),
. de la mémoire morte (ROM),
. des périphériques spécifiques de gestion, d'entrée-sortie, etc....

Dans ces configurations, la mémoire vive et la mémoire morte servent aux composants programmables pour la réalisation des fonctions et algorithmes en logiciel ; les périphériques permettent, éventuellement à l'aide de la mémoire vive, l'interfaçage des composants programmables avec l'extérieur (i.e. avec le reste de l'application).

On appelle circuit ASIC "classique" un circuit ASIC sans composant programmable.

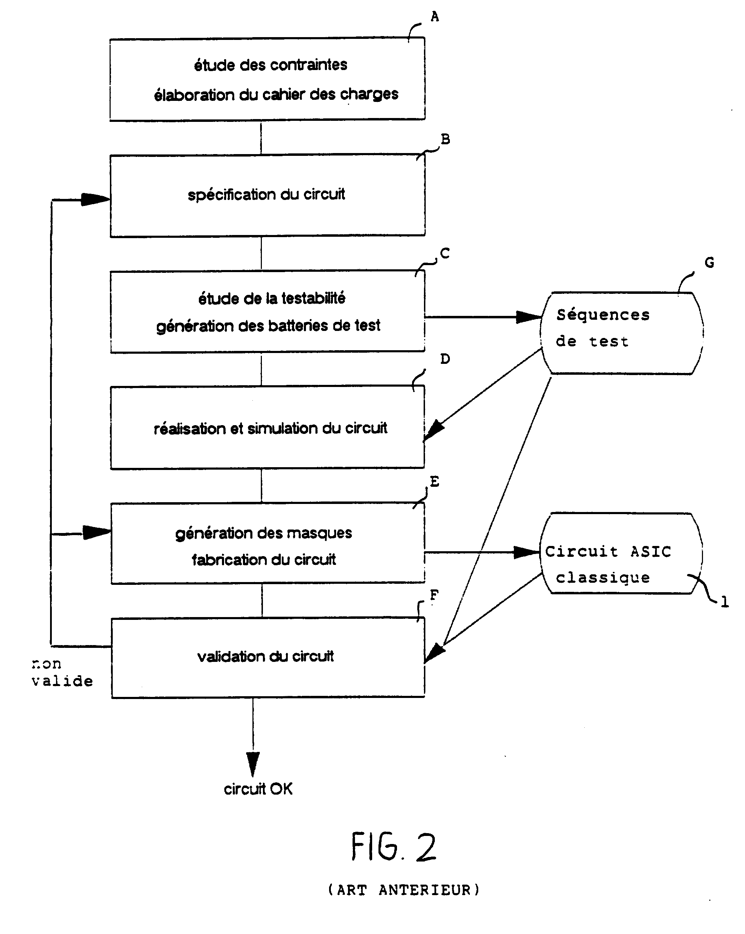

Le développement d'un tel circuit ASIC classique se fait en plusieurs phases (représentées sur la Figure 2) qui sont les suivantes:
. élaboration du cahier des charges en fonction des contraintes (encombrement, prix, etc...) (A),
. spécification du circuit correspondant au cahier des charges (B),
. étude de testabilité du circuit (C),
. réalisation et simulation du circuit (D) à l'aide de la bibliothèque du fondeur (fabricant du circuit "hardware") et des séquences ("patterns") de test (G) définies par l'étude de testabilité sur une station de travail,
. génération des masques et fabrication du circuit (E),
. validation (F) du circuit à l'aide des séquences ("patterns") de test.

Bien entendu, on appelle circuit ASIC programmé, un circuit ASIC qui comporte au moins un composant programmable, ce composant est programmé au cours de son développement.

Le développement classique d'un circuit ASIC programmé se déroule selon les phases suivantes :
. élaboration du cahier des charges en fonction des contraintes (encombrement, prix, etc...) (A),
. spécification du circuit correspondant au cahier des charges (I). Choix des fonctions réalisées en hardware et des fonctions réalisées en software.
. étude de testabilité du circuit hardware et du logiciel (J),
. réalisation et simulation d'un modèle du circuit à l'aide de la bibliothèque du fondeur (fabricant du circuit "hardware") et des séquences ("patterns") de test définies par l'étude de testabilité sur une station de travail,
. réalisation des modules logiciels et test à l'aide des séquences ("patterns") de test définies par l'étude de testabilité sur une station de travail (Q) à l'aide d'un modèle du circuit,
. génération des masques et fabrication du circuit (O),
. validation du circuit à l'aide des séquences ("patterns") de test.

Cette méthode de développement connue pose les problèmes suivants :
. Elle ne permet pas de simuler totalement le circuit à cause des temps de calculs trop importants et la validation est donc incomplète.
. Son prix de développement est prohibitif (elle nécessite une station de travail par personne impliquée).
. Le temps de développement qu'elle implique est long (on sérialise la réalisation du modèle du circuit et l'écriture du logiciel.

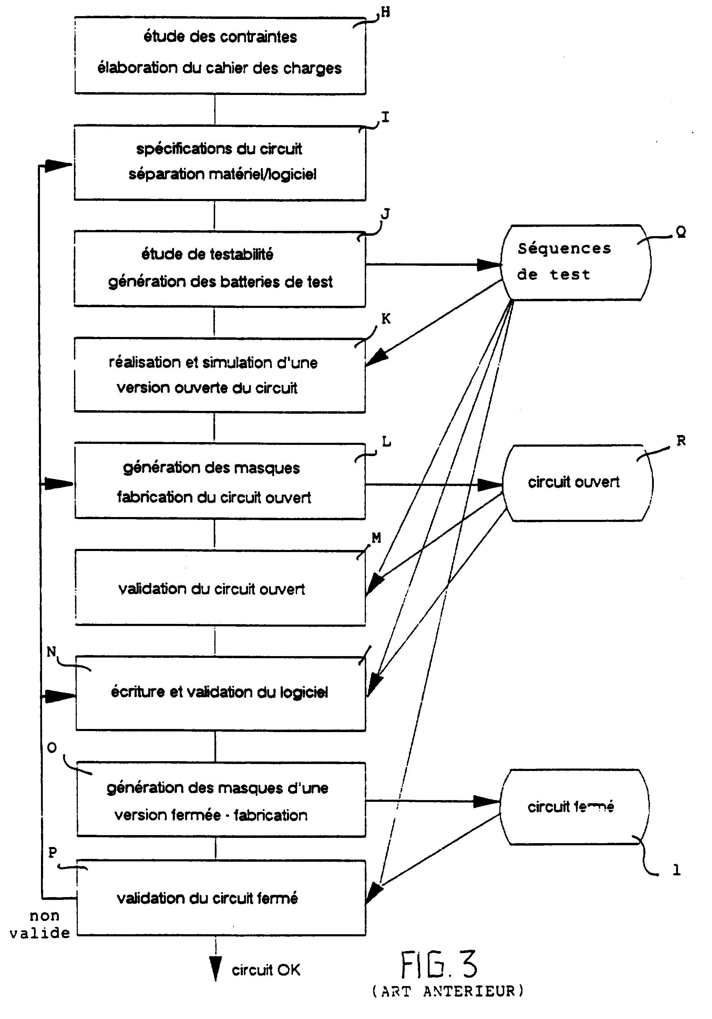

On préfère donc généralement procéder en deux phases, selon le procédé représenté sur la Figure 3 :
- fabrication d'une première version (R) non programmée, mais programmable du circuit (version ouverte) comportant les étapes suivantes :
   . réalisation et simulation d'un modèle d'une version ouverte de circuit (K),
   . génération des masques et fabrication du circuit ouvert (L),
   . validation électrique du circuit ouvert (M),
- écriture et validation fonctionnelle du logiciel (N) sur ce circuit et sur l'application finale à l'aide d'un banc de test (MODEM, Téléphonie, etc...),
- fabrication d'une seconde version (1) optimisée en coût, incluant le logiciel (version fermée) comportant les étapes suivantes :
   . génération des masques de la version fermée et fabrication (O),
   . validation électrique du circuit fermé,
- validation fonctionnelle sur l'application finale à l'aide d'un banc de test.

Cette approche, qui permet de s'affranchir du problème de la simulation du circuit, pose d'autres problèmes, en particulier :
- le coût du développement est élevé à cause de la fabrication d'une version ouverte du circuit final,
- les temps de développement sont longs car :
   . on est obligé d'attendre la fabrication d'un premier circuit avant d'écrire le logiciel,
   . la technique de validation fonctionnelle utilisée est mal adaptée à l'écriture et au test de logiciels, en effet :
      - les résultats de validation fonctionnelle ne donnent qu'une information globale sur le comportement de l'ensemble application + circuit ASIC + logiciel et obligent à deviner la nature des problèmes (séparation hard/soft difficile),
      - les mesures se font en temps réel, sur des statistiques, et ne sont pas reproductibles, ce qui rend impossible la vérification de la validité d'une correction,

   - le temps de la boucle écriture du logiciel - validation - est long (procédure de validation sur plusieurs jours),
   - il n'est pas possible de tester partiellement le logiciel avant que tous les modules ne soient écrits (ces modules ne seront donc pas validés isolément, un par un),
- la phase de validation est longue et d'autant plus chère qu'elle doit être faite entièrement à chaque modification du logiciel.

Lors de la conception, on distingue trois parties dans un circuit ASIC programmé :
- le matériel (périphériques de gestion, entrée-sortie, etc...),
- le logiciel de traitement qui assure les fonctions de filtrage, compression numérique, etc...,
- le logiciel de gestion qui assure la gestion du matériel et le séquencement des modules logiciels.

L'objectif de l'invention est de permettre le développement en parallèle du logiciel et du matériel dans le but :
- de diminuer le prix du circuit en permettant le choix a posteriori du meilleur compromis logiciel/matériel,
- de diminuer le temps de développement du circuit final en développant en parallèle le logiciel et le matériel.

Un autre objectif de l'invention est de :
- fiabiliser et faciliter le développement du logiciel en proposant des moyens de validation et d'investigation (debug) supplémentaires (donc une meilleure couverture) et des plate-formes de test de bas coûts (ce qui permet d'en avoir plusieurs, contrairement au banc de validation ou aux stations de travail),
- diminuer les coûts de développements en évitant de fabriquer un circuit intermédiaire (version ouverte).

L'invention concerne donc un procédé de développement d'un circuit intégré ASIC programmé dédié à une application incorporant sur une même puce :
- un coeur de processeur de signal,
- une mémoire vive RAM, une mémoire morte ROM destinée à recevoir un logiciel de gestion et un logiciel de traitement,
- des périphériques de gestion d'entrée/sortie spécifiques de l'application.

Le coeur de processeur de signal, la mémoire vive RAM et la mémoire morte ROM correspondent respectivement à des composants discrets existants.

On développe par simulation le matériel, le logiciel de gestion et les interactions entre eux en utilisant une station de travail et des séquences de test (étude de testabilité).

Selon l'invention, le logiciel de traitement est développé et testé sur une plate-forme de test comportant au moins lesdits composants discrets à l'aide d'un logiciel d'interface qui permet le pilotage de la plate-forme et l'enchaînement automatique de tests depuis un micro-ordinateur.

Dans différents modes de mise en oeuvre préférés, le procédé de l'invention comporte les étapes suivantes, éventuellement selon toutes leurs combinaisons techniquement possibles :
- on fabrique une version programmable (ouverte) du circuit ASIC programmé et une plate-forme de test (pour ce circuit programmable), de manière à développer et à tester le logiciel de traitement,
- on fabrique une version programmée (fermée) du circuit et une plate-forme de test (pour ce circuit fermé), de manière à valider l'ensemble du logiciel de traitement et de gestion,
- les tests faits sur la plate-forme de test comportent des communications de données numériques directement entre le micro-ordinateur et la plate-forme de test, indépendamment des périphériques de gestion d'entrée/sortie spécifiques de l'application,
- les tests faits sur la plate-forme de test comportent le téléchargement d'un programme à partir du micro-ordinateur et dans la mémoire vive (RAM) de la plate-forme de test,
- on constitue, par simulation ou par expérimentation, une base de données des tests et de leurs résultats dans le micro-ordinateur,
- on compare les résultats des tests obtenus avec les résultats attendus (stockés dans la base de données) correspondant soit aux simulations, soit aux expérimentations précédentes,
- le logiciel de gestion permet l'activation (la désactivation) des points de test et de visualisation définis dans le logiciel de traitement, la visualisation du contenu des mémoires et des registres importants du coeur de DSP (ou de microprocesseur), l'exécution du logiciel en et hors temps réel pour sa validation,
- un logiciel d'interface permet le pilotage de la plate-forme de test et l'enchaînement des tests du logiciel de traitement de façon automatique en et hors temps réel.

L'invention concerne également une plate-forme de test pour le développement d'un circuit intégré ASIC programmé dédié à une application incorporant sur une même puce :
- un processeur de signal,
- une mémoire vive RAM, une mémoire morte ROM, destinée à recevoir un logiciel de gestion et un logiciel de traitement,
- des périphériques de gestion d'entrée/sortie spécifiques de l'application,

Selon l'invention, cette plate-forme comporte des composants discrets correspondants respectivement au coeur du processeur de signal, à la mémoire vive RAM, à la mémoire morte ROM et des chemins numériques permettant le test du logiciel de traitement à partir d'un micro-ordinateur.

L'invention concerne également une telle plate-forme qui comporte des composants discrets correspondants respectivement à la version programmable du circuit intégré ASIC programmé, à la mémoire vive RAM, à la mémoire morte ROM et des chemins numériques permettant le test du logiciel de traitement à partir d'un micro-ordinateur.

L'invention concerne encore une telle plate-forme qui comporte des composants discrets correspondants respectivement à la version programmée du circuit intégré ASIC programmé, à la mémoire vive RAM et des chemins numériques, et permet la validation du logiciel de traitement et de gestion, indépendamment de l'application finale.

L'invention sera décrite ci aprés en détail, en référence aux dessins annexés, sur lesquels :
- la Figure 1 est une représentation schématique d'un ASIC programmable selon l'art antérieur ;
- la Figure 2 est une représentation schématique du développement d'un circuit ASIC classique selon l'art antérieur ;
- la Figure 3 est une représentation schématique du développement d'un circuit ASIC programmé selon l'art antérieur ;
- les Figures 4A, 4B et 4C sont une représentation schématique du développement d'un circuit ASIC programmé selon l'invention ;
- la Figure 5 est une représentation schématique fonctionnelle d'une plate-forme de test selon l'invention comportant un coeur de DSP;
- les Figures 6A et 6B sont une représentation d'ensemble des composants utilisés pour la réalisation de la plate-forme de la Figure 5 ;
- les Figures 7A et 7B sont une représentation détaillée du bus d'interface PC ;
- les Figures 8A et 8B sont des représentations d'une première partie du registre de contrôle ;
- les Figures 9A et 9B représentent le module de décodage du registre de contrôle ;
- les Figures 10A et 10B représentent le registre de commande ; - les Figures 11A et 11B représentent le générateur d'adresses de l'interface PC ;
- les Figures 12A et 12B représentent la mémoire vive ;
- les Figures 13A et 13B représentent le microprocesseur ;
- les Figures 14A et 14B représentent le module de décodage d'adresses du DSP;
- la Figure 15 représente le registre de sortie ;
- la Figure 16 représente le registre d'entrée ;
- les Figures 17A et 17B représentent le convertisseur.

Sur la Figure 1, le circuit intégré 1 dédié, de type ASIC, comporte un microprocesseur DSP (Digital Signal Processor) 2, une mémoire morte ROM 3 destinée à recevoir un programme, une mémoire vive RAM 4 et des éléments particuliers divers 5 auxquels sont reliés l'entrée-sortie 6 du circuit intégré.

L'ensemble de ces éléments est destiné à être intégré dans un circuit unique.

Par ailleurs, ces éléments existent chacun à l'état discret et ont déjà été complètement testés dans cet état, indépendamment les uns des autres.

Lors de la conception, on distingue trois parties dans un circuit ASIC programmé :
- le matériel (périphériques de gestion, entrée-sortie, etc...),
- le logiciel de traitement qui assure les fonctions de filtrage, compression numérique, etc...,
- le logiciel de gestion qui assure la gestion du matériel et le séquencement des modules logiciels.

On développe par simulation le matériel, le logiciel de gestion et les interactions entre eux en utilisant une station de travail et des séquences de test (étude de testabilité).

On réalise une plate-forme de test, comprenant :
- un circuit fabriqué grâce au coeur de DSP (DSP core) ou de microprocesseur,
- de la mémoire vive (RAM),
- des chemins numériques (et analogiques) des données,
- un logiciel de gestion et de test (spécifique à la plate-forme),
- une logique de contrôle,
- éventuellement des périphériques destinés à être intégrés dans le circuit final.

On développe et l'on teste le logiciel de traitement sur une plate-forme de test à l'aide du coeur du circuit DSP (DSP core) et des séquences "pattern" de test.

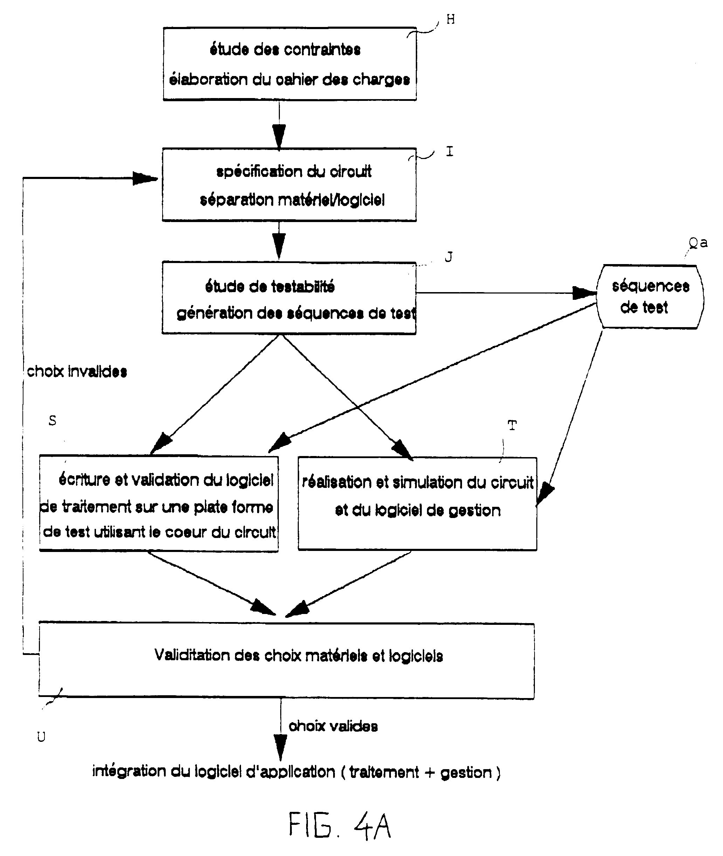

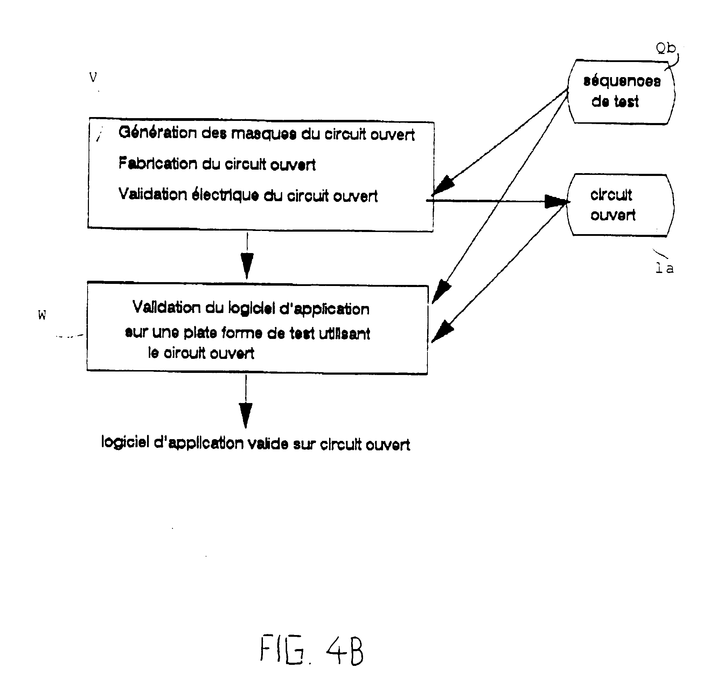

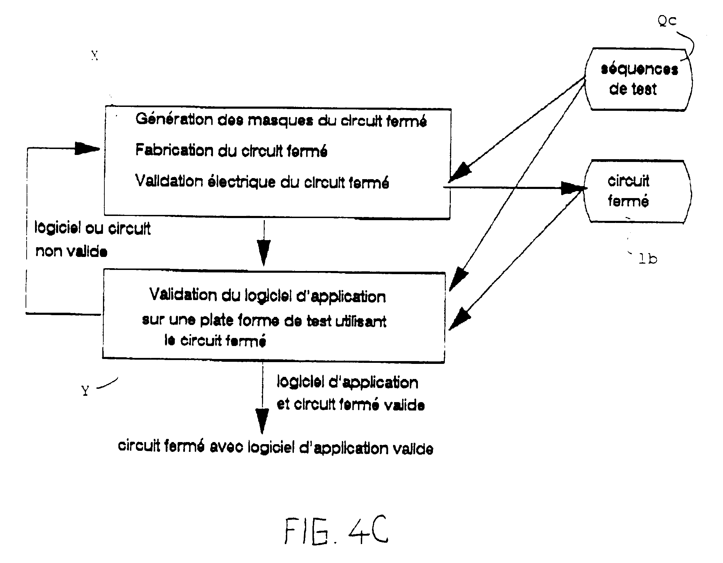

Le développement du circuit ASIC programmé se fait alors selon le procédé suivant, représenté sur les Figures 4A, 4B et 4C :
. élaboration du cahier des charges en fonction des contraintes (encombrement, prix, etc...) (H),
. spécification du circuit correspondant au cahier des charges. Définition du matériel, du logiciel de traitement, du logiciel de gestion (I),
. étude de testabilité du circuit hardware et du logiciel (J),
. réalisation et simulation du circuit à l'aide de la bibliothèque du fondeur (fabricant du circuit "hardware") et des séquences de test définies par l'étude de testabilité sur une station de travail (S),
. réalisation et simulation du logiciel de gestion à l'aide des séquences de test définies par l'étude de testabilité sur une station de travail (Q),
. réalisation des modules logiciels et test unitaire et global à l'aide des séquences de test Qa définies par l'étude de testabilité sur une plate-forme de test (différente de l'application finale) (T),
. validation des choix matériel et logiciel (U).

Cette validation permet l'intégration du logiciel d'application comprenant le logiciel de traitement et le logiciel de gestion.

On peut alors procéder aux opérations représentées sur la Figure 4B pour valider le logiciel d'application sur le circuit ouvert. A cet effet :
. on génère des masques du circuit ouvert la, on le fabrique et on en fait la validation électrique à partir des séquences de test Qb (V);
. on réalise alors la validation du logiciel d'application sur une plate-forme de test utilisant le circuit ouvert (W).

On procède ensuite à la validation du circuit fermé 1b avec le logiciel d'application, tel que représenté sur la Figure 4C :
. on génère des masques du circuit fermé 1b, on fabrique ce circuit et on en réalise la validation électrique (X);
. on valide alors avec les séquences de test le logiciel d'application Qb sur une plate-forme de test utilisant le circuit fermé (Y).

Bien entendu, les opérations (X) et (Y) doivent être répétées jusqu'à obtenir la validation nécessaire.

La réalisation du matériel et du logiciel de gestion peut ainsi être menée de front avec la réalisation des modules logiciel de traitement. Ceci permet des gains de temps et l'optimisation du circuit (correction des spécifications) jusqu'à la génération des masques.

Dans un mode particulier, et en particulier dans le cas où l'on ne peut réaliser de manière simple, à l'aide de composants discrets, l'émulation des périphériques du circuit final sur la plate-forme de test, on peut réaliser une deuxième plate-forme de test semblable à la première, mais utilisant une version programmable du circuit final, de manière à valider le logiciel de gestion autrement que par simulation. Dans ce cas, les périphériques et éventuellement, la logique de contrôle, sont intégrés dans le circuit (version programmable du circuit final).

Dans un autre mode particulier, on réalise une troisième plate-forme de test semblable à la deuxième, mais utilisant le circuit final (programmé), de manière à valider le circuit final et son logiciel (gestion et traitement), indépendamment de l'application finale. Dans ce cas :
- les périphériques et éventuellement, la logique de contrôle, sont intégrés dans le circuit,
- le logiciel de gestion doit être capable de gérer la plate-forme de test et l'application finale.

L'invention concerne donc un procédé de développement d'un circuit ASIC programmé dans lequel on réalise une plate-forme de test spécifique avec un circuit fabriqué à partir du coeur du circuit programmable pour l'écriture et le test du logiciel de traitement, différente de l'application finale, de manière à pouvoir développer ce logiciel avant l'existence du circuit ASIC et à éviter la réalisation de masques pour le circuit ouvert.

On réalise une plate-forme de test comprenant :
- un circuit fabriqué grâce au coeur de DSP (ou de microprocesseur),
- de la mémoire vive (RAM) et/ou de la mémoire morte (ROM),
- des chemins numériques (et analogiques) des données,
- un logiciel de gestion et de test (spécifique à la plate-forme),
- une logique de contrôle,
- éventuellement des périphériques destinés à être intégrés dans le circuit final.

Le circuit fabriqué grâce au coeur de DSP (ou de microprocesseur) permet le développement et le test des fonctions du logiciel de traitement avant que le circuit final programmé n'existe, à l'aide des séquences de test (cf. utilisation de la carte pour les tests de validation et de non-régression).

La mémoire vive permettra le chargement aisé des programmes (et de leurs coefficients) et servira de zone de travail. La mémoire morte pourra, en remplacement d'une partie de la mémoire vive, permettre le stockage et le test d'une version particulière du logiciel (archivage).

Les chemins numériques de données permettent d'envoyer, grâce au logiciel de gestion, les données nécessaires au logiciel de traitement, comme le ferait l'application, et de récupérer les réponses de ce logiciel de traitement sous forme numérique. Des chemins analogiques peuvent être ajoutés, pour acquérir des signaux et en faire des bases de tests et pour restituer des signaux provenant du logiciel de traitement.

Le logiciel de gestion de la plate-forme permettra l'activation (la désactivation) des points de tests et de visualisation définis dans le logiciel de traitement, la visualisation des mémoires et des registres importants du coeur de DSP (ou de microprocesseur), l'exécution du logiciel de traitement en et hors temps réel (pour sa validation).

La logique de contrôle de cette plate-forme, qui permet de configurer le coeur de DSP (ou de microprocesseur) et de lui envoyer des ordres, devra être semblable à celle de l'application finale, de manière à pouvoir émuler au mieux les sollicitations de l'application sur le logiciel.

Dans de nombreux cas, une partie des périphériques qui seront intégrés dans le circuit final existe, ou peut être réalisée de manière simple à l'aide de composants discrets (liaison série, convertisseur numérique analogique/analogique numérique, etc...). Une émulation fonctionnelle de ces périphériques sur la plate-forme de test permettra d'obtenir un fonctionnement du logiciel (gestion + traitement) sur la plate-forme de test proche de celui sur l'application.

On réalise avantageusement une plate-forme de test utilisant une version programmable du circuit final (i.e. avec de la RAM au lieu de la ROM, mais avec tous les périphériques), de manière à tester le logiciel de gestion autrement que par simulation.

On réalise également, de préférence, une plate-forme de test utilisant le circuit final pour tester celui-ci, indépendamment de l'application finale. Cette plate-forme utilisera la même logique de contrôle que l'application finale, de manière à ce que le logiciel de gestion puisse gérer la plate-forme de test et l'application. Dans ce cas, les périphériques et éventuellement, la logique de contrôle, sont sur le circuit final.

On réalise un logiciel de gestion permettant d'accéder aux ressources de la plate-forme de test, d'activer des points de test et de visualisation définis dans le logiciel de traitement, la visualisation des mémoires et des registres importants du coeur de DSP (ou de microprocesseur), l'exécution du logiciel de traitement en et hors temps réel (pour sa validation).

Cette plate-forme est de préférence pilotée depuis un micro-ordinateur par un logiciel d'interface qui permettra de gérer les ressources de la plate-forme et de dialoguer avec le logiciel de gestion. Ce logiciel permet en outre la validation et le contrôle de non-régression automatique du logiciel de traitement à l'aide de séquences de tests numériques prédéfinis stockés sur le disque dur du micro-ordinateur. Ce logiciel peut aussi émuler une partie de l'application agissant sur le circuit (par exemple un micro-contrôleur avec son logiciel).

On réalise un logiciel d'interface pour micro-ordinateur permettant, outre l'accès aux ressources de la plate-forme de test, la validation et le contrôle de non-régression automatique du logiciel de traitement à l'aide de séquences de tests numériques stockés sur le disque dur du micro-ordinateur. Ce logiciel peut aussi émuler une partie de l'application agissant sur le circuit (par exemple microcontrôleur avec son logiciel).

Ainsi, on a réalisé une plate-forme de test (carte PC-ST932) à partir du coeur de DSP ST18932. Sur cette plate-forme, les chemins numériques de données sont réalisés par des fifos (registre à décalage premier entré/premier sorti), la logique de contrôle comprend une boîte aux lettres et l'on a ajouté un convertisseur numérique analogique et analogique numérique dédié à la téléphonie. Des convertisseurs auxiliaires permettent de visualiser des informations sur un oscilloscope.

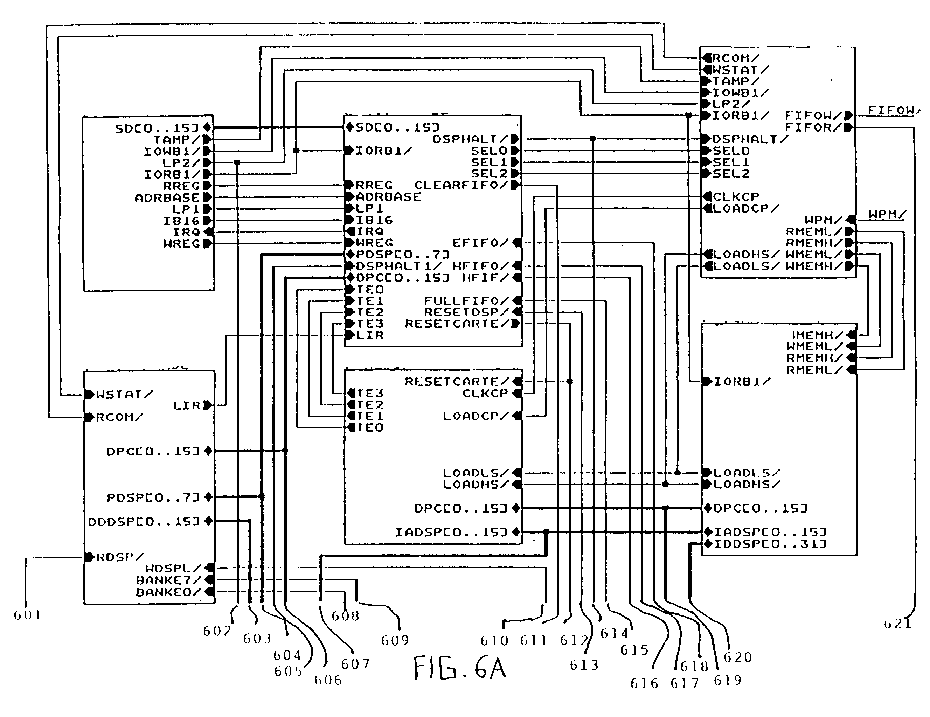

Cette plate-forme est représentée sur la Figure 5 ; le circuit intégré 2 a été représenté en faisant apparaître son unité de calcul ALU (Arithmetic Logic Unit) 21 et ses mémoires vives 22 et 23.

Le circuit intégré 2 est associé à une mémoire vive 112 émulant la RAM 4 destinée au stockage des données, une mémoire vive 111 émulant la mémoire morte ROM 3 et permettant le chargement du logiciel.

Des registres 71, 72 FIFO (de type First-In First-Out) assurent le transfert de données, d'une part depuis le DSP vers le micro-ordinateur 72, d'autre part du micro-ordinateur vers le DSP 71.

L'émulation des parties 5 et 6 est assurée par un convertisseur 7 assurant sa liaison avec les entrées-sorties 61, 62, et par un registre 81, dit registre de commande et de statut, permettant le dialogue avec un micro-ordinateur ou un autre microprocesseur.

Un registre 82 permet le contrôle du fonctionnement de la plate-forme de test depuis le micro-ordinateur.

Un bus local 91 permet la communication du microprocesseur 2 avec les autres éléments du circuit intégré.

Un bus 92 d'interface permet le chargement du logiciel dans la mémoire vive 111 depuis le micro-ordinateur et les échanges de données entre le circuit intégré 2 et le micro-ordinateur.

Des interfaces 101 à 110 assurent la liaison des différents éléments du circuit intégré avec les bus de données 91 et 92.

L'interface 101 relie le DSP/circuit intégré 2 au bus local 91.

L'interface 102 relie la mémoire vive externe 112 au bus local 91.

L'interface 103 relie le convertisseur 7 au bus local 91.

L'interface 104 relie le registre FIFO d'entrée 71 au bus local 91.

L'interface 105 relie le bus local 92 au registre FIFO d'entrée 71.

L'interface 106 relie le registre FIFO de sortie 72 au bus local 91.

L'interface 107 relie le bus local 92 d'interface PC au registre FIFO de sortie 72.

L'interface 108 relie le registre de commande 81 au bus local 91.

L'interface 109 relie le bus 92 au registre de commande 81.

L'interface 110 relie le bus 92 au registre de contrôle 82.

Le micro-ordinateur 300 permet le test des différents interfaces 101 à 110.

Alors que les tests logiciels sont habituellement réalisés grâce à des modèles de type VHDL (Very High Hardware Description Language) qui nécessitent des calculs, des temps de traitement très longs, l'invention permet la réalisation de ces opérations dans un temps limité et avec des puissances de calculs restreintes.

Le micro-ordinateur 300 peut également être utilisé, avec des programmes adéquats, pour la réalisation du logiciel destiné à figurer dans la mémoire morte ROM 3 (assemblage, édition de lieu).

Le micro-ordinateur 300 peut également être utilisé avec le logiciel d'interface pour la réalisation des tests du logiciel destiné à figurer dans la mémoire morte ROM 3, qui sont habituellement faits sur une station de travail à l'aide d'un modèle de type VHDL du circuit et nécessitant des temps de calcul importants. Ces tests peuvent de plus être effectués en temps réel, ce qui n'est pas possible lorsque l'on simule le circuit avec un modèle.

Dans une première étape, on génère, éventuellement avec ce micro-ordinateur, un fichier exécutable avec les fichiers-source du logiciel destiné à figurer dans la mémoire morte ROM 3. Ce fichier exécutable, stocké sur un support (disque dur, disquettes, disque optique) et accessible depuis le micro-ordinateur, est ensuite chargé dans la mémoire vive 111 qui joue le rôle de la mémoire morte ROM 3.

Le logiciel d'interface permet ensuite l'enchaînement des différents tests et la comparaison des résultats obtenus avec les résultats attendus, stockés dans la base de tests, de manière à valider le logiciel destiné à figurer dans la mémoire morte ROM 3, indépendamment de la validation de l'application finale.

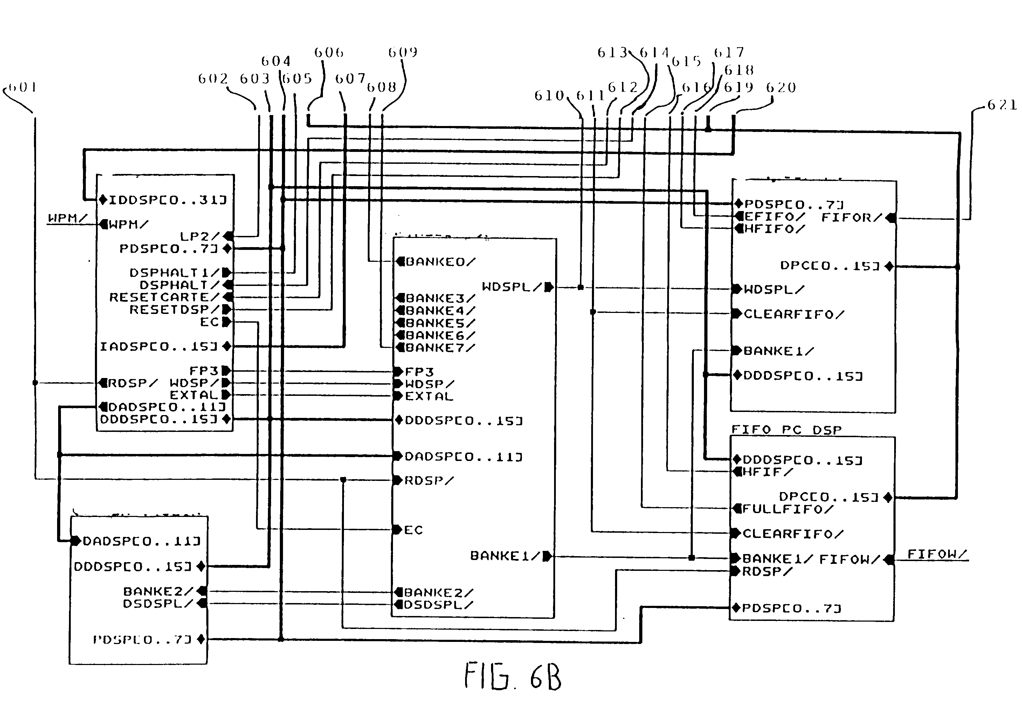

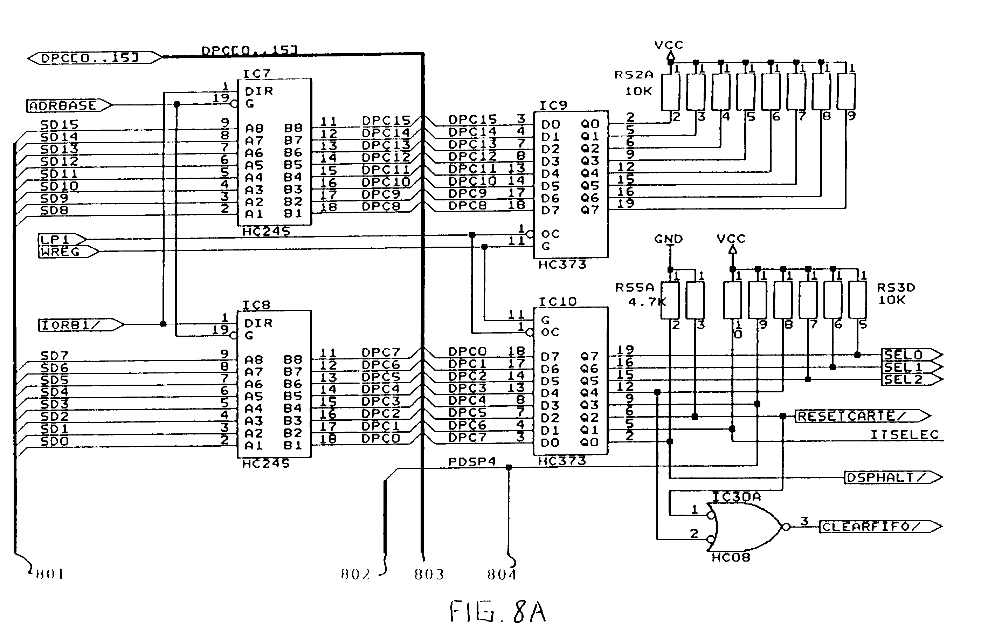

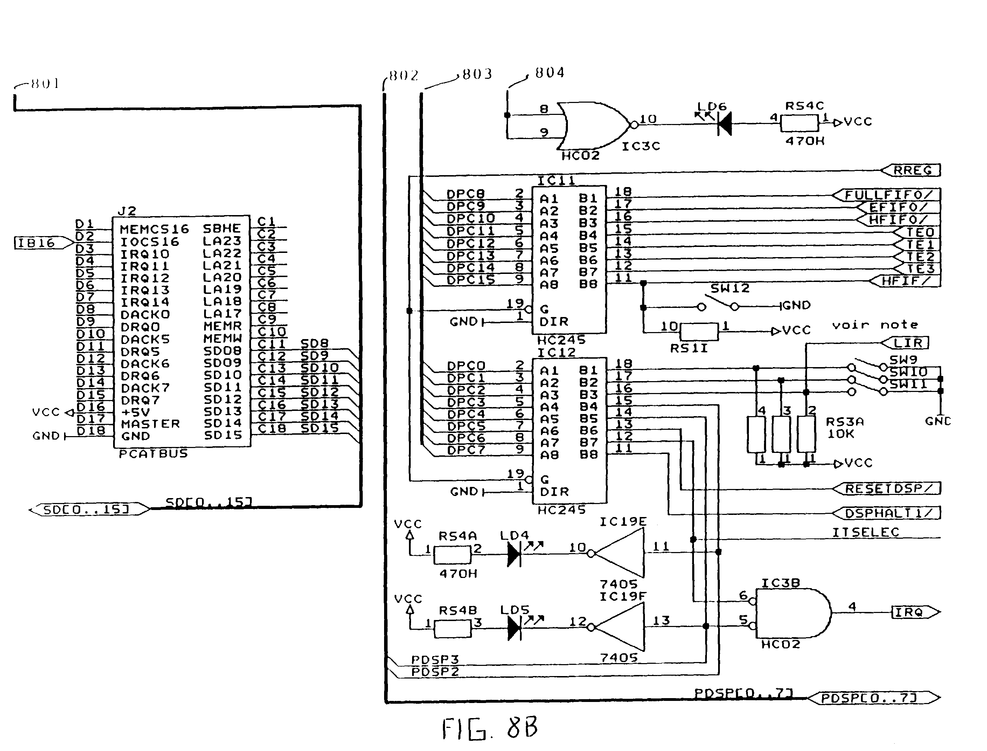

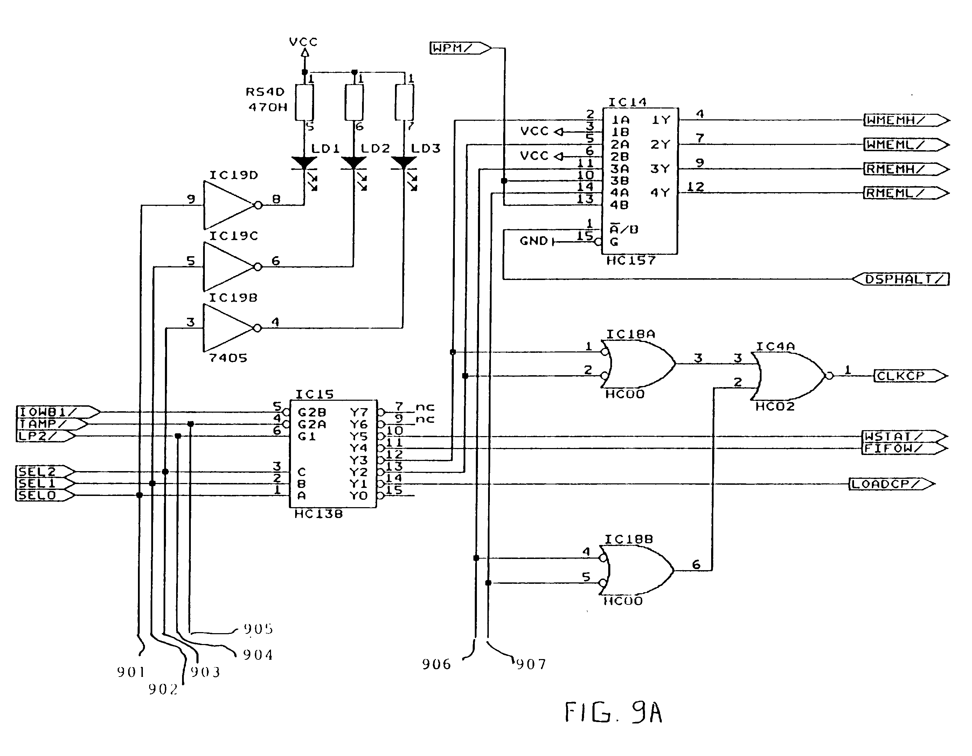

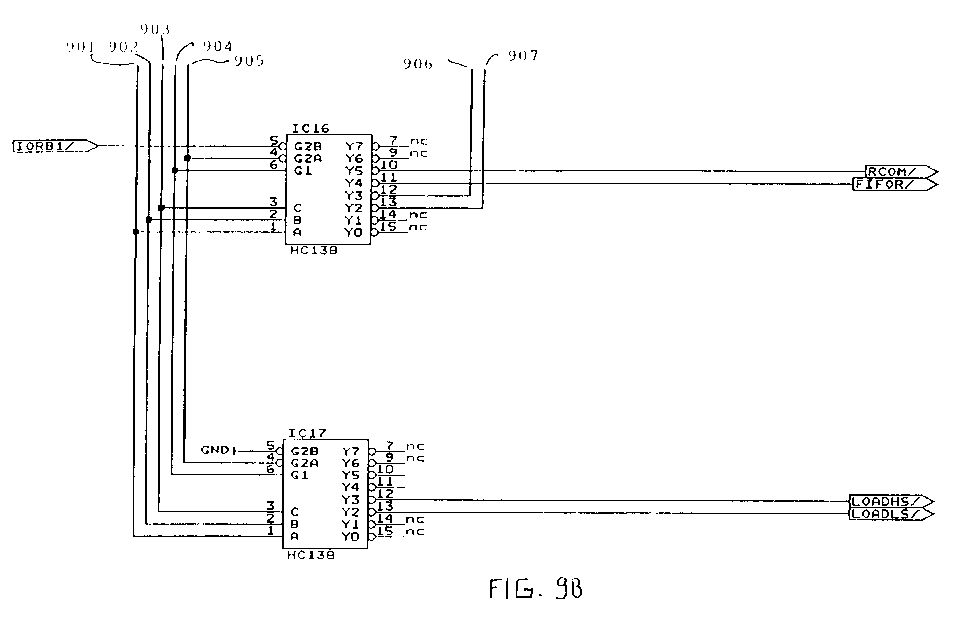

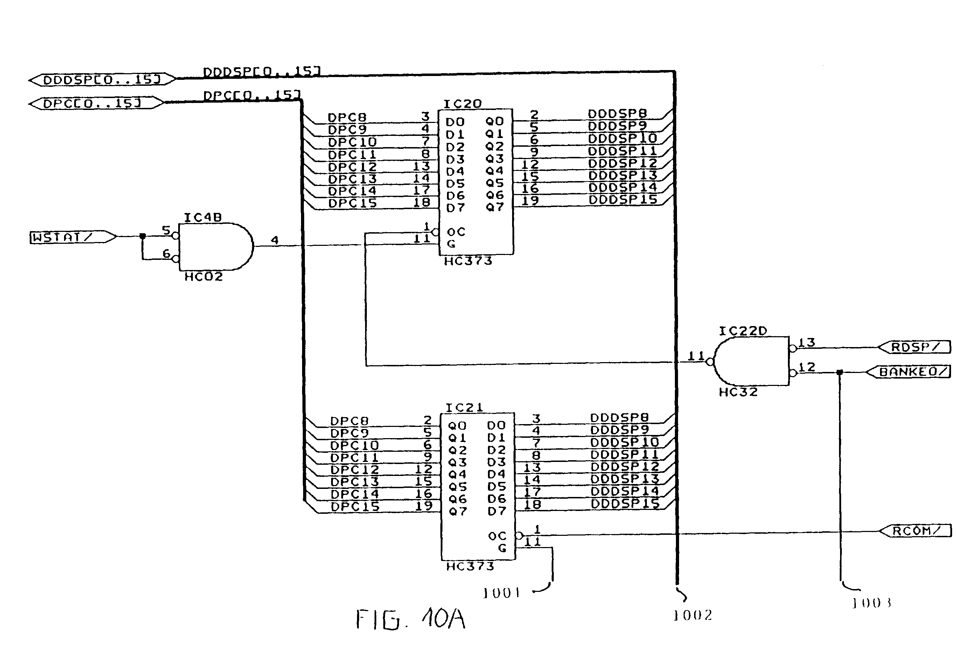

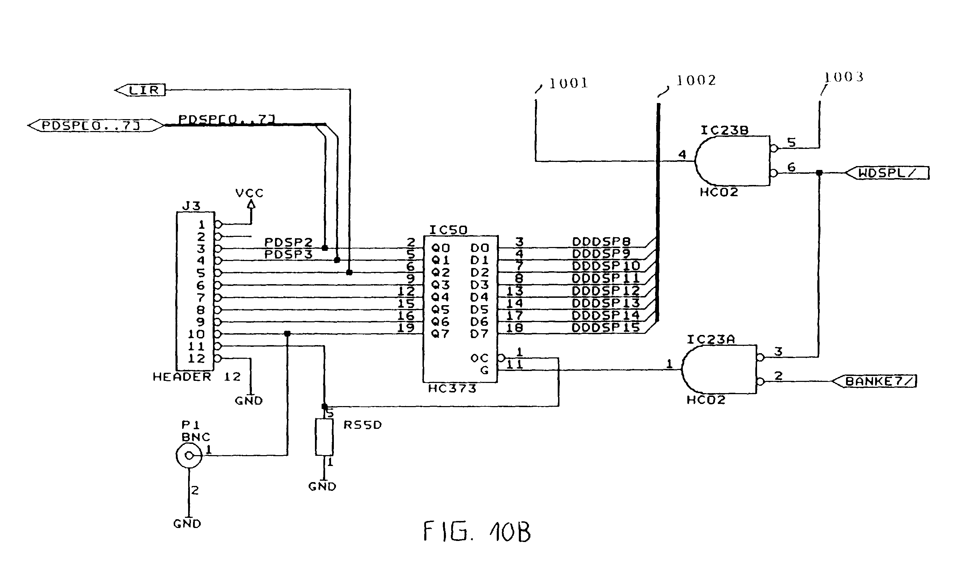

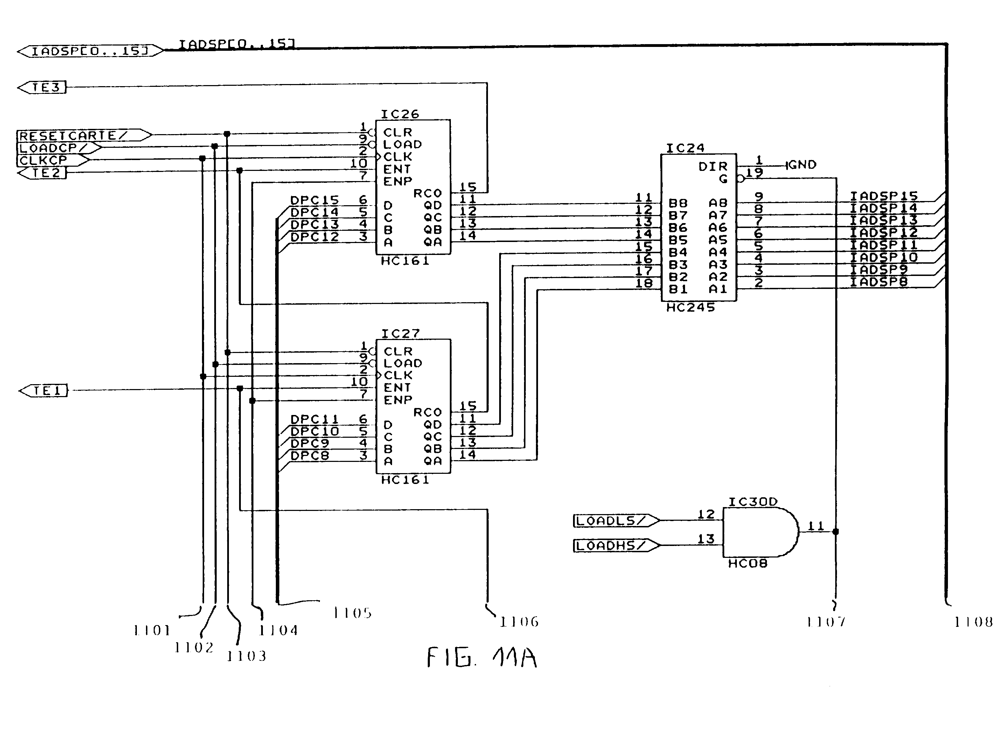

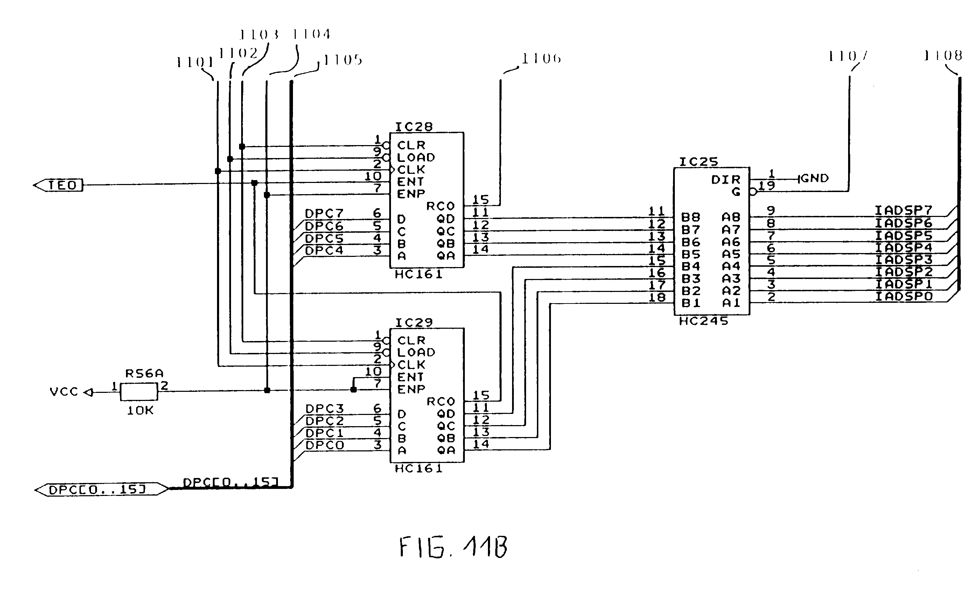

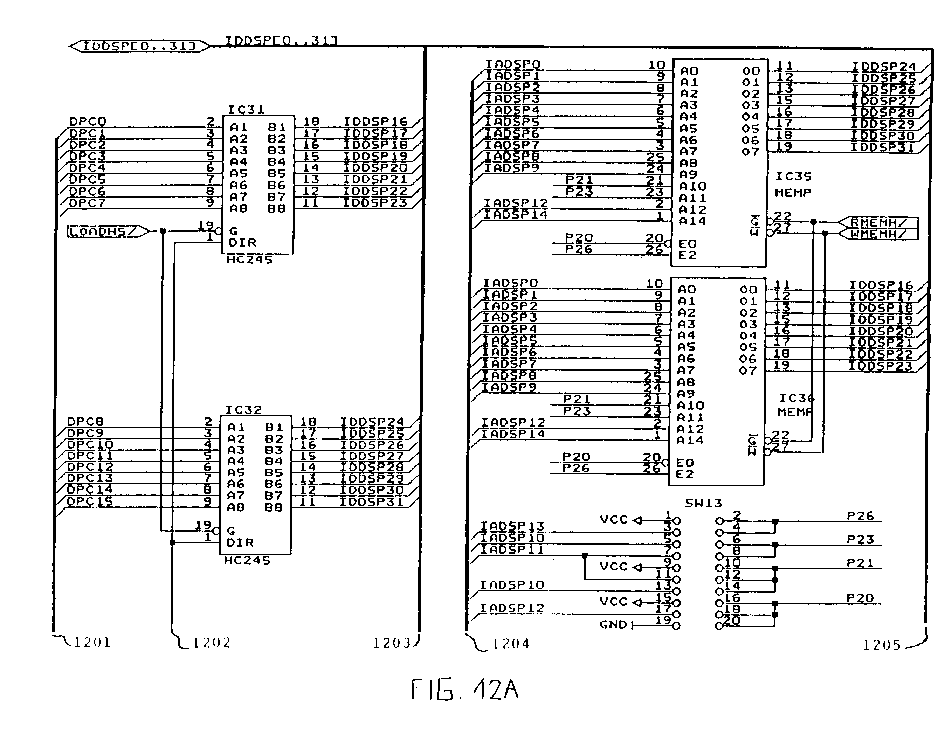

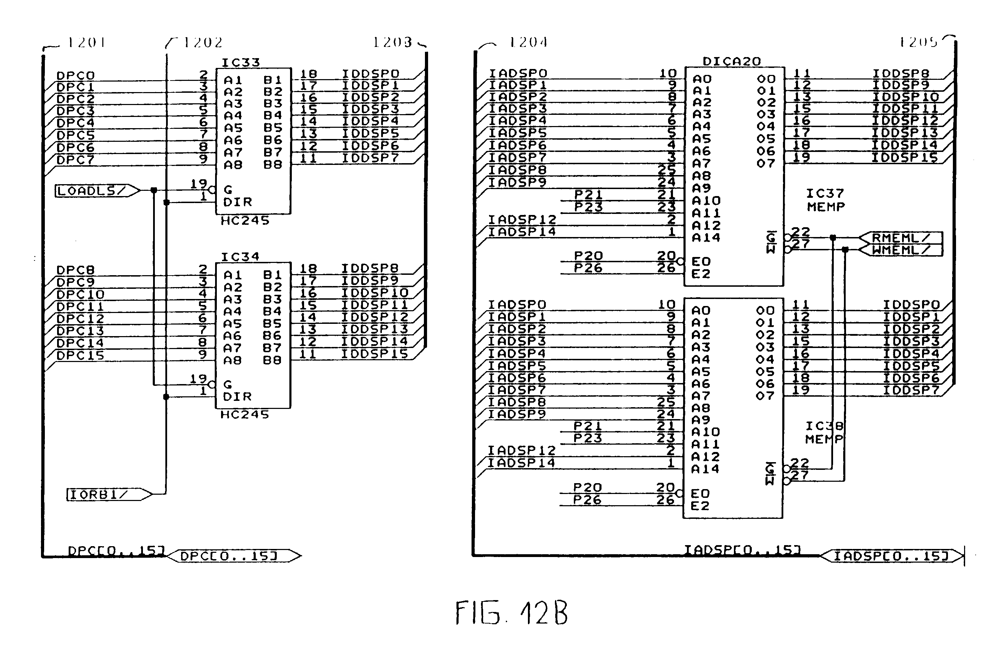

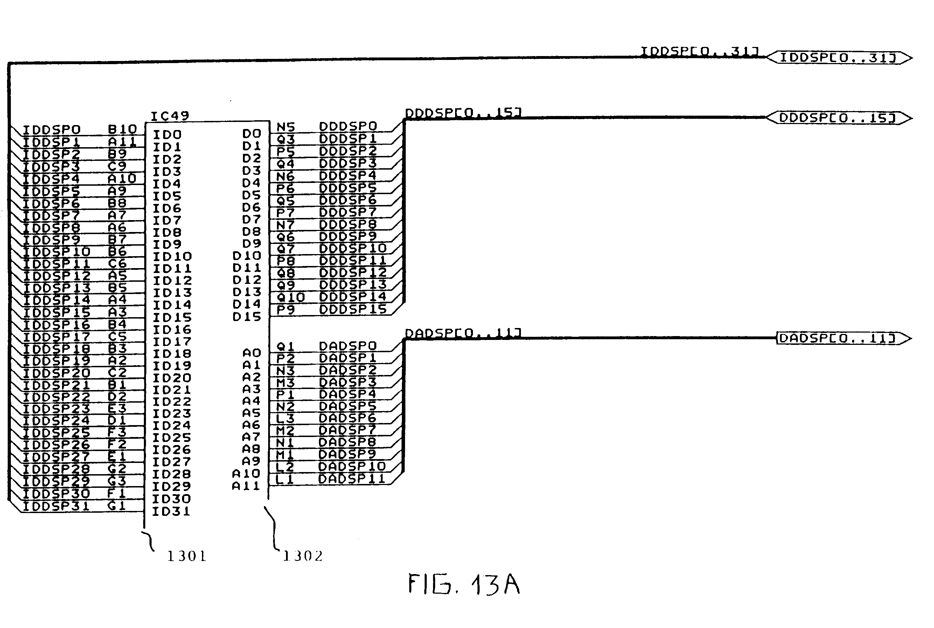

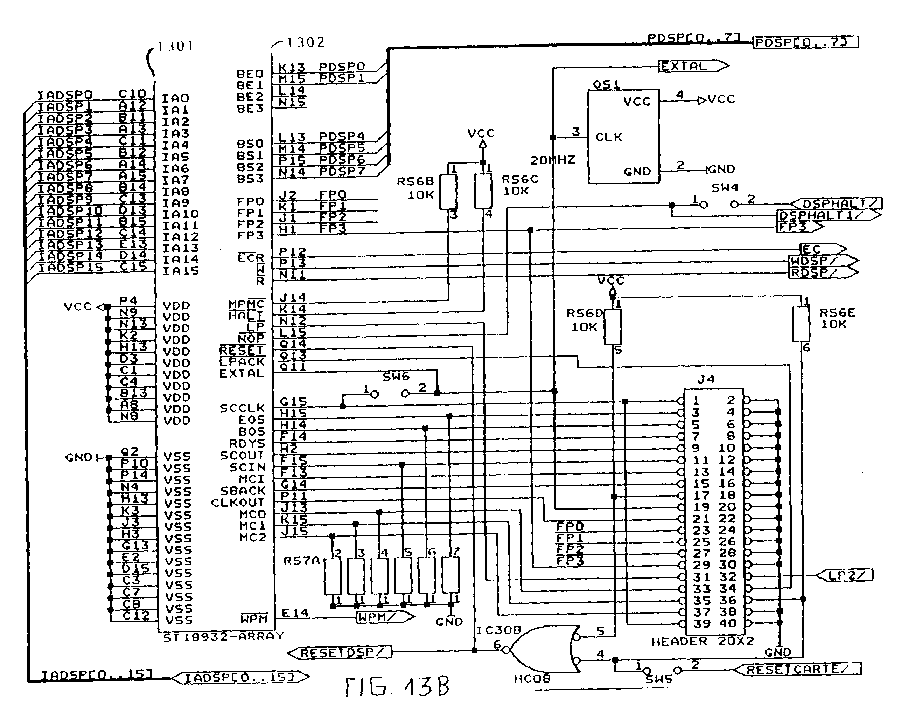

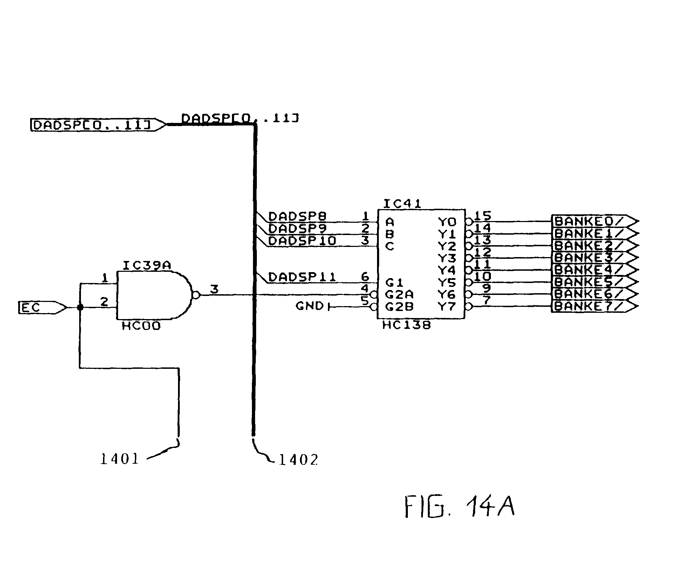

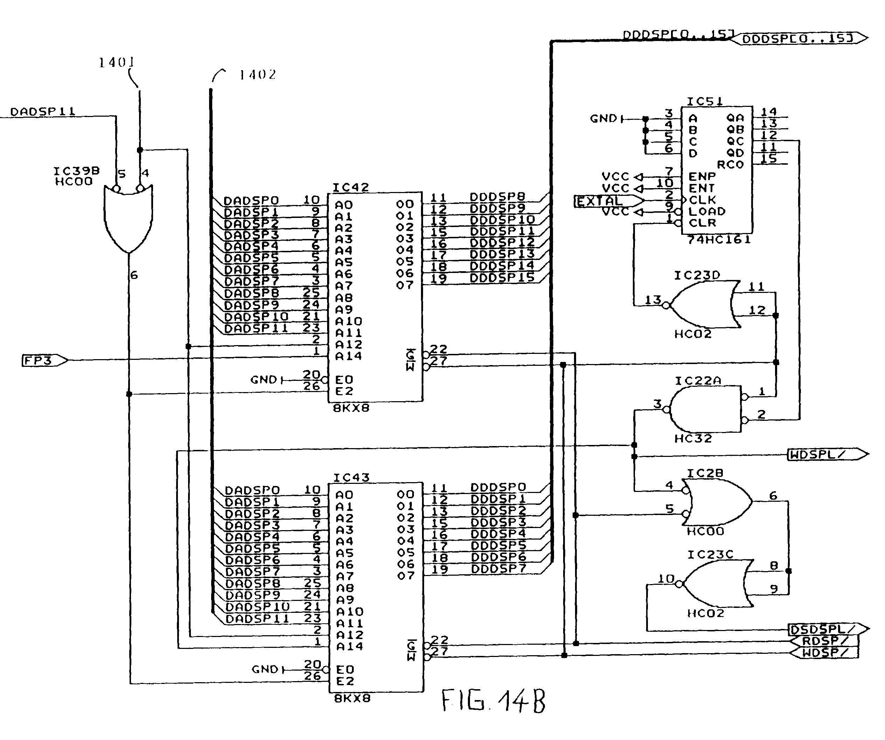

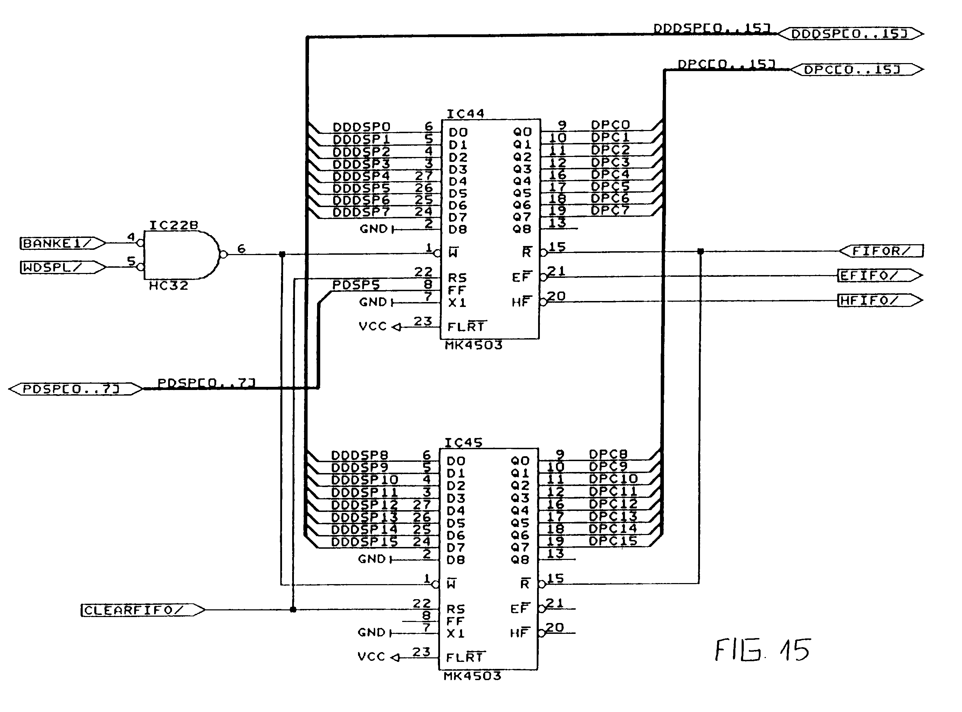

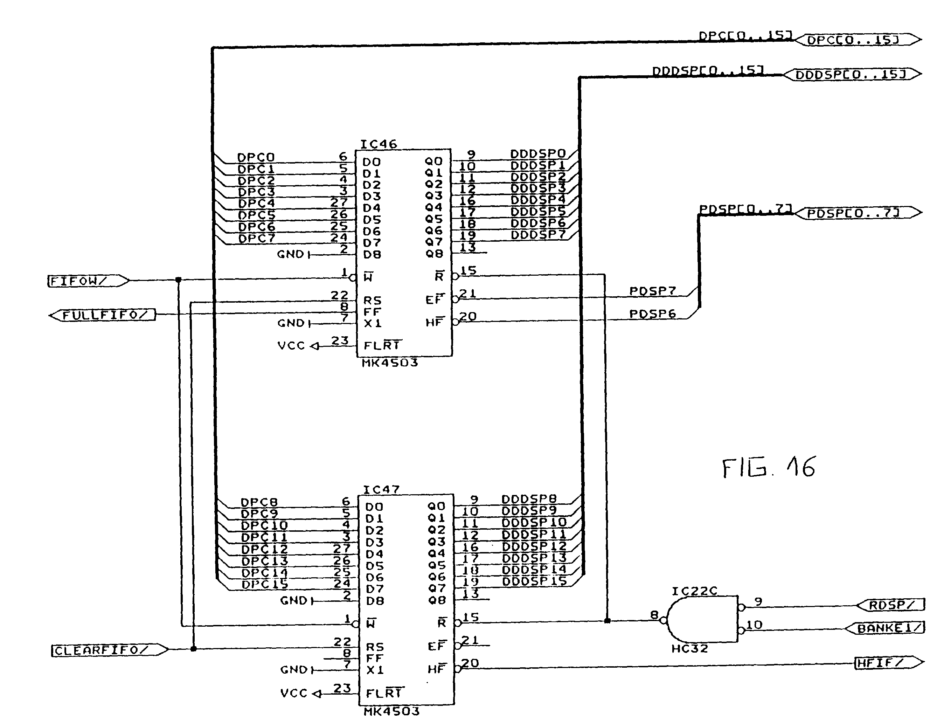

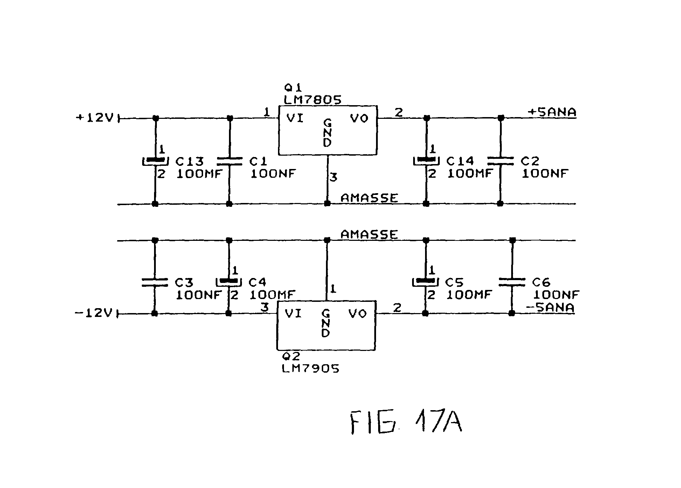

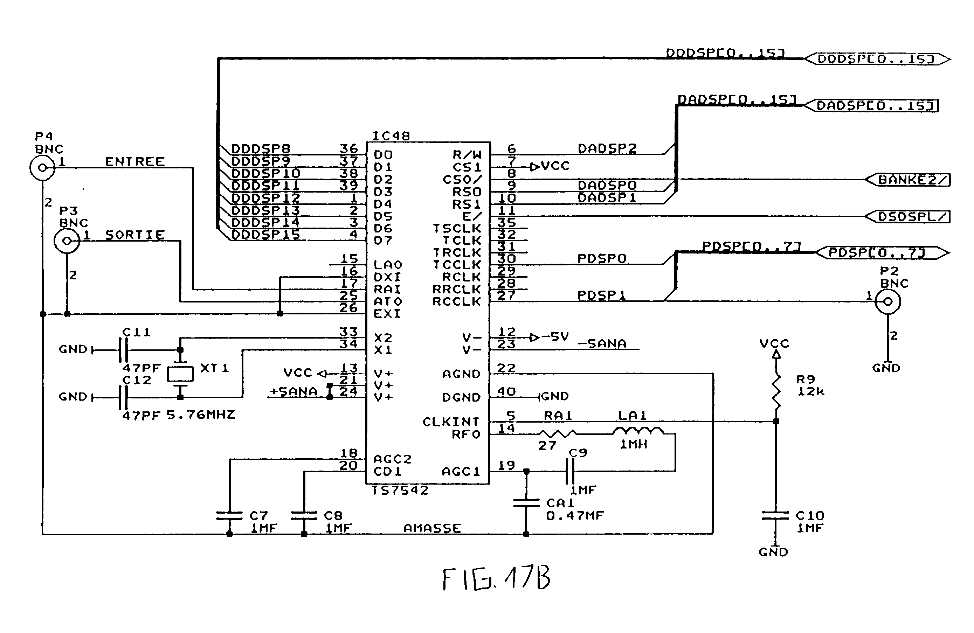

Cette plate-forme de test réalisée à partir du DSP ST18932 est représentée précisément sur les Figures 6 à 17.

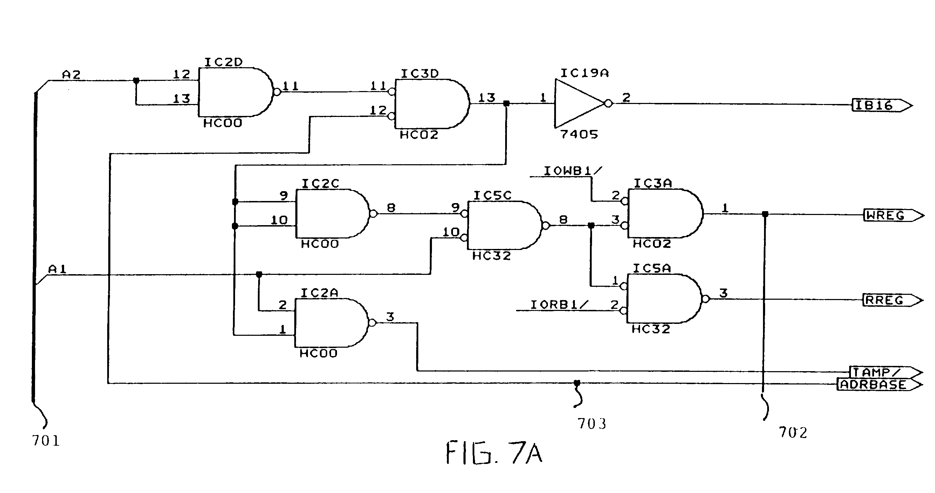

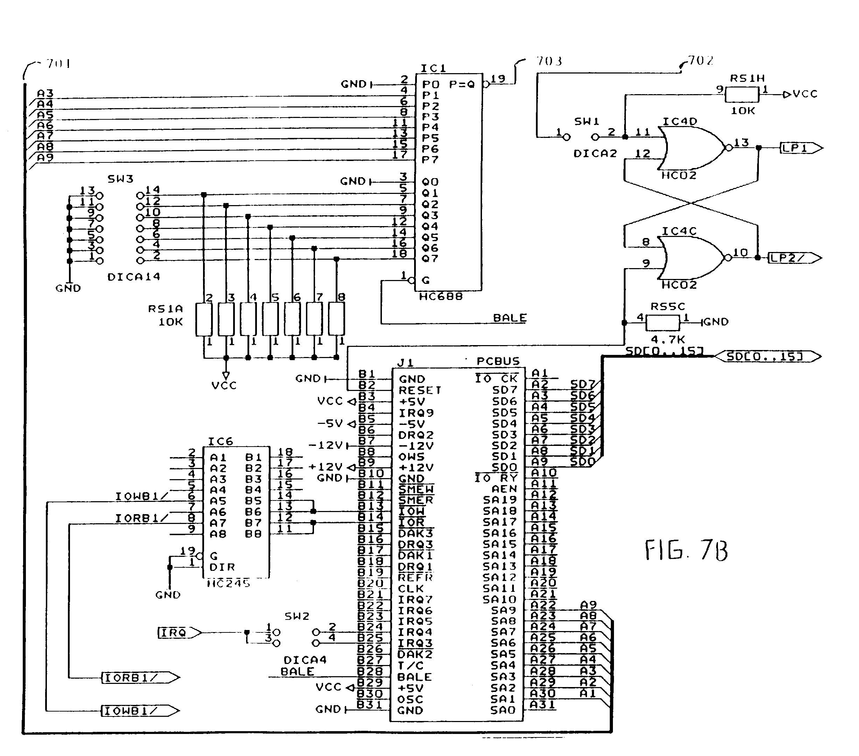

Les Figures 6A et 6B sont une représentation d'ensemble de cette plate-forme et les Figures 7 à 17 en reprennent chacun des éléments en détail.

Les connexions ont été représentées de manière traditionnelle en donnant le même nom aux broches de deux composants reliés par une connexion électrique.

Les connexions multiples et parallèles ont été représentées en faisant suivre leurs noms d'une parenthèse dans laquelle figure un zéro représentant la première liaison, deux points et le numéro de la dernière des liaisons, par exemple DPC[0..15], PDSP[0..7],....

Sur les Figures 6A et 6B, on retrouve les composants portant la même référence que sur la Figure 5 en 2 le DSP, en 7 le convertisseur, en 72 le registre de sortie, en 71 le registre d'entrée.

Compte tenu des différents modes de représentation, certains éléments fonctionnels de la Figure 5 ne correspondent pas à un homologue unique sur les Figures 6A et 6B.

Ainsi, le bus 92 a ses fonctions partiellement remplies par l'interface PC 120 et par le générateur d'adresses 121. De même, le registre de contrôle 82 a ses fonctions partiellement remplies par le registre 122 et par le dispositif de décodage 123. De manière analogue, le dispositif de décodage adresses du DSP 124 n'est pas représenté sur la Figure 5.

Sur les Figures détaillées 7 à 17, chaque composant porte sa référence attachée à la partie supérieure du signe qui le représente et son type à la partie inférieure.

Les références du type du composant sont les références commerciales utilisées par la Société SGS-THOMSON :
HCT245 est un transmetteur de bus 3 états.
CD représente des condensateurs dont la valeur est précisée sur les schémas.
SW13 représente un ensemble de 20 picots.
MEMP est une mémoire RAM.
HCT373 est une bascule 3 états.
HCT32 est une fonction logique.
HCT02 est une fonction logique nor.
MK4503 est un registre premier entré, premier sorti.
HCT161 est un compteur binaire.
SIL2 est un réseau de résistances.
PCATBUS est le connecteur du bus d'un micro-ordinateur de type compatible IBM PC AT.
7405 est un tampon inverseur à collecteur ouvert.
HCT157 est un multiplexeur.
HCO8 est une fonction logique AND.
HCT138 est un décodeur.
HCT00 est une bascule nand.
LM7805 est un régulateur de tension.
TS7542 est un convertisseur A/D, D/A.
DICA2 est un ensemble de 2 picots.
DICA4 est un ensemble de 4 picots.
DICA14 est un ensemble de 14 picots.
HCT688 est un comparateur 8 bits.

Lorsque le circuit intégré est disponible, il est possible de comparer son fonctionnement à celui de la carte électronique et de tester progressivement, par analogie, l'ensemble de ces éléments.

On réalise par ailleurs un circuit ASIC programmable ST18934 incluant dans la partie ASIC:
- un convertisseur analogique numérique,
- un convertisseur numérique analogique,
- un bloc DMA (direct memory access),
- un bloc permettant de gérer de la mémoire dynamique (de type ARAM),
- de la mémoire statique,
- de la mémoire morte (ROM),
- une boîte aux lettres.

On a réalisé également une plate-forme de test (carte PC-ST934) à partir du circuit ST18934. Cette plate-forme de test dispose des mêmes chemins numériques et de la même logique de contrôle que la plate-forme réalisée à partir du coeur de DSP. On a supprimé le convertisseur 7 qui se trouve dans le circuit ST18934.

On a réalisé également un logiciel de gestion pour chaque plate-forme de test. Ces logiciels de gestion permettent :
- l'activation (et la désactivation) de points de test et de visualisation,
- l'exécution en et hors temps réel du logiciel de traitement,
- la visualisation du contenu des mémoires et des principaux registres,
- l'accès aux chemins numériques et analogiques de données, aux périphériques de la plate-forme de test et/ou du circuit.

On a réalisé encore un logiciel d'interface pour les différentes plate-formes. Ce logiciel permet la validation automatique du logiciel de traitement à l'aide de séquences de tests prédéfinis. Il permet également le stockage sur le disque dur du micro-ordinateur de données provenant des chemins numériques et la restitution de données depuis le disque dur vers les chemins numériques de la plate-forme de test. Il est peu dépendant de la plate-forme utilisée, ce qui permet d'avoir une interface homme-machine commune pour les différentes plate-formes.

Le développement de circuit intégré spécifique programmé suit les étapes suivantes :
- élaboration du cahier des charges en fonction des contraintes de l'utilisateur (encombrement, prix...),
- spécification du circuit correspondant au cahier des charges ; définition du matériel, du logiciel de traitement, du logiciel de gestion, du logiciel d'interface,
- étude de la testabilité du circuit, de ses composants matériels et du logiciel,
- définition et simulation du circuit à l'aide de la bibliothèque du fondeur et des tests,
- réalisation et simulation du logiciel de gestion à l'aide des tests définis pour l'étude de testabilité sur une station de travail,
- réalisation des modules logiciels et test unitaire et global à l'aide des tests définis par l'étude de testabilité sur une plate-forme de test,
- génération des masques et fabrication du circuit,
- validation du circuit à l'aide des tests.

Lors de la conception du circuit intégré spécifique, la définition des fonctions bloc par bloc a conduit au choix des différents éléments, à la répartition de ces fonctions et à leurs interconnexions.

Parallèlement au développement du circuit intégré (vérification de la conception, simulation fonctionnelle, étude de la stabilité... sur une station de travail, placement et routage, fabrication), on réalise une carte électronique regroupant les composants discrets et les reliant de manière à permettre de faire remplir à chacun d'eux les fonctions préalablement déterminées.

De plus, cette carte électronique est accompagnée d'un logiciel d'interface avec un micro-ordinateur.

Ce micro-ordinateur permet la simulation de l'environnement du circuit intégré, en remplissant les fonctions qui ne sont pas susceptibles d'être remplies par des composants discrets existants, en permettant la réalisation du logiciel destiné à figurer dans la mémoire morte ROM 3, en permettant la conception et la réalisation des tests des fonctions logicielles réalisées et des interfaces logiciel/logiciel et logiciel/matériel, en constituant une base de données des tests réalisés qui pourront ainsi être mis en oeuvre sur le circuit intégré lorsqu'il sera disponible.

Ainsi, avec des moyens limités, les principaux points spécifiques et sensibles (fonctions et interfaces) du circuit intégré et du logiciel peuvent être testés, sans qu'il soit nécessaire à recourir à des tests particulièrement longs et sophistiqués, qui nécessitent la mise en oeuvre de moyens de calculs importants seulement disponibles sur de grosses machines ou sur des stations de travail.

Le procédé et la carte électronique de l'invention peuvent être adaptés et mis en oeuvre pour tester et développer de nombreux circuits intégrés.

Parmi les circuits intégrés susceptibles d'être traités de cette manière, indiquons ceux destinés à la compression des données représentant la parole, les modems, les compressions d'images....

L'exemple de réalisation qui a été décrit plus haut, a permis la réalisation d'un module de répondeur téléphonique statique avec compression et décompression des signaux sonores.

La ou les plate-formes mises en oeuvre permettent le suivi des traitements réalisés par le microprocesseur à partir d'un échantillon de paroles de référence ou l'étude dans différentes configurations (DSP seul, ASIC ouvert, ASIC fermé), l'échantillon sonore soit de référence, soit aléatoirement déterminé.

Dans tous ces cas, des séquences sonores peuvent être échantillonnées, numérisées et mises en mémoire dans le micro-ordinateur, de manière à ce que les informations numérisées les représentant puissent être, à l'identique, reproduites aussi souvent que nécessaire et introduites au niveau du traitement et sous la forme voulue.

Les signes de référence, insérés après les caractéristiques techniques mentionnées dans les revendications, ont pour seul but de faciliter la compréhension de ces dernières, et n'en limitent aucunement la portée.

## Revendications

1. Procédé de développement d'un circuit intégré ASIC programmé dédié à une application incorporant sur une même puce :
- un coeur de processeur de signal (2),
- une mémoire vive RAM (3), une mémoire morte ROM (4) destinée à recevoir un logiciel de gestion et un logiciel de traitement,
- des périphériques de gestion d'entrée/sortie spécifiques de l'application, (5)
le processeur de signal (2), la mémoire vive RAM (4) et la mémoire morte ROM (3) correspondant respectivement à des composants discrets existants,
caractérisé en ce que le logiciel de traitement est développé et testé, au moins partiellement avant la fabrication d'une version programmable du circuit ASIC, sur une plate-forme de test comportant au moins lesdits composants discrets (2,3,4) à l'aide d'un logiciel d'interface qui permet le pilotage de la plate-forme et l'enchaînement automatique de tests depuis un micro-ordinateur.

2. Procédé de développement d'un circuit intégré selon la revendication 1, caractérisé en ce que l'on fabrique une version programmable (ouverte) du circuit ASIC programmé et une plate-forme de test (pour ce circuit programmable), de manière à développer et à tester le logiciel de traitement.

3. Procédé de développement d'un circuit intégré selon la revendication 1, caractérisé en ce que l'on fabrique une version programmée (fermée) du circuit et une plate-forme de test (pour ce circuit fermé), de manière à valider l'ensemble du logiciel de traitement et de gestion.

4. Procédé de développement d'un circuit intégré selon l'une des revendications 1 à 3, caractérisé en ce que les tests faits sur la plate-forme de test comportent des communications de données numériques directement entre le micro-ordinateur et la plate-forme de test, indépendamment des périphériques de gestion d'entrée/sortie spécifiques de l'application (5).

5. Procédé de développement d'un circuit intégré selon l'une des revendications 1 à 4, caractérisé en ce que les tests faits sur la plate-forme de test comportent le téléchargement d'un programme à partir du micro-ordinateur et dans la mémoire vive (RAM) (3) de la plate-forme de test.

6. Procédé de développement d'un circuit intégré selon l'une quelconque des revendications 1 à 5, caractérisé en ce que l'on constitue, par simulation ou par expérimentation, une base de données des tests et de leurs résultats dans le micro-ordinateur.

7. Procédé de développement d'un circuit intégré selon la revendication 6, caractérisé en ce que l'on compare les résultats des tests obtenus avec les résultats attendus (stockés dans la base de données) correspondant soit aux simulations, soit aux expérimentations précédentes.

8. Procédé de développement d'un circuit intégré selon l'une quelconque des revendications 1 à 7, caractérisé en ce que le logiciel de gestion permet l'activation (la désactivation) des points de test et de visualisation définis dans le logiciel de traitement, la visualisation du contenu des mémoires et des registres importants du coeur de DSP (ou de microprocesseur), l'exécution du logiciel en et hors temps réel pour sa validation.

9. Procédé de développement d'un circuit intégré selon l'une quelconque des revendications 1 à 8, caractérisé en ce qu'un logiciel d'interface permet le pilotage de la plate-forme de test et l'enchaînement des tests du logiciel de traitement de façon automatique en et hors temps réel.

## Patentansprüche

1. Verfahren zur Entwicklung einer programmierten integrierten ASIC-Schaltung, die einer Anwendung gewidmet ist und auf demselben Chip aufweist:
- einen Signalprozessorkern (2),
- einen Direktzugriffsspeicher RAM (3) und einen Festwertspeicher ROM (4) zur Aufnahme eines Datenverwaltungsprogramms und eines Datenverarbeitungsprogramms,
- anwendungsspezifische Eingangs-/Ausgangsverwaltungsperipherieeinrichtungen (5),
- wobei der Signalprozessor (2), der Direktzugriffsspeicher RAM (4) und der Festwertspeicher ROM (3) jeweils existierenden diskreten Komponenten entsprechen,
dadurch gekennzeichnet, daß das Datenverarbeitungsprogramm wenigstens zum Teil vor der Herstellung einer programmierbaren Version der ASIC-Schaltung auf einer Testplattform, die wenigstens die diskreten Komponenten (2, 3, 4) aufweist, mit Hilfe eines Interfaceprogramms entwickelt und getestet wird, das das Treiben der Plattform und die automatische Verknüpfung von Tests von einem Mikrocomputer aus ermöglicht.

2. Verfahren zur Entwicklung einer integrierten Schaltung nach Anspruch 1, dadurch gekennzeichnet, daß eine programmierbare (offene) Version der programmierten ASIC-Schaltung und eine Testplattform (für die programmierbare Schaltung) hergestellt wird, derart, daß das Datenverarbeitungsprogramm entwickelt und getestet werden kann.

3. Verfahren zur Entwicklung einer integrierten Schaltung nach Anspruch 1, dadurch gekennzeichnet, daß eine programmierte (geschlossene) Version der Schaltung und eine Testplattform (für die geschlossene Schaltung) hergestellt wird, derart, daß die Gesamtheit des Datenverarbeitungs- und Datenverwaltungsprogramms validiert werden kann.

4. Verfahren zur Entwicklung einer integrierten Schaltung nach einem der Ansprüche 1 bis 3, dadurch gekennzeichnet, daß die an der Testplattform vorgenommenen Tests Übertragungen von digitalen Daten zwischen dem Mikrocomputer und der Testplattform unabhängig von den anwendungsspezifischen Eingangs-/Ausgangsverwaltungsperipherieeinrichtungen (5) umfassen.

5. Verfahren zur Entwicklung einer integrierten Schaltung nach einem der Ansprüche 1 bis 4, dadurch gekennzeichnet, daß die an der Testplattform vorgenommenen Tests das Fernladen eines Programms vom Mikrocomputer aus in den Direktzugriffsspeicher (RAM) (3) der Testplattform umfassen.

6. Verfahren zur Entwicklung einer integrierten Schaltung nach einem der Ansprüche 1 bis 5, dadurch gekennzeichnet, daß durch Simulation oder Versuche eine Datenbank über die Tests und deren Ergebnisse im Mikrocomputer erstellt wird.

7. Verfahren zur Entwicklung einer integrierten Schaltung nach Anspruch 6, dadurch gekennzeichnet, daß die erhaltenen Testergebnisse mit den (in der Datenbank gespeicherten) erwarteten Ergebnissen, die entweder vorangegangenen Simulationen oder vorangegangenen Versuchen entsprechen, verglichen werden.

8. Verfahren zur Entwicklung einer integrierten Schaltung nach einem der Ansprüche 1 bis 7, dadurch gekennzeichnet, daß das Datenverwaltungsprogramm die Aktivierung (die Deaktivierung) von in dem Testprogramm definierten Test- und Visualisierungspunkten, die Visualisierung des Speicherinhalts und der wichtigen Register des Kerns des DSP (oder des Mikroprozessors) und die Ausführung des Programms in Echtzeit und Nicht-Echtzeit zu dessen Validierung ermöglicht.

9. Verfahren zur Entwicklung einer integrierten Schaltung nach einem der Ansprüche 1 bis 8, dadurch gekennzeichnet, daß ein Interfaceprogramm das Treiben der Testplattform und das automatische Verknüpfen der Verarbeitungsprogrammtests in Echtzeit und Nicht-Echtzeit ermöglicht.

## Claims

1. Process for developing a programmed ASIC integrated circuit dedicated to an application incorporating on a same chip :
- a signal processor core (2),
- a RAM memory (3)
- a ROM memory (4) intended to receive a management software and a processing software.
- input-output management peripherals (5) specific to the application, the signal processor (2), the RAM memory (4) and the ROM memory (3) corresponding respectively to existing discrete components,
characterized in that the processing software is developed and tested, at least partially before the production of a programmable version of the ASIC circuit, on a test platform comprising at least said discrete components (2,3,4) with the aid of an interface software which allows the platform to be controlled and automatic chaining of tests from a microcomputer.

2. The IC development process of claim 1, characterized in that a programmable (open) version of the programmed ASIC and a test platform (for this programmable IC) are produced in order to develop and test the processing software.

3. The IC development process of claim 1, characterized in that a programmed (closed) version of the IC and a test platform (for this closed IC) are produced in order to validate all the processing and management software.

4. The IC development process of any of claims 1 to 3, characterized in that the tests conducted on the test platform include direct digital data communications between the microcomputer and the test platform, independently of the input-output management peripherals (5) specific to the application.

5. The IC development process of any of claims 1 to 4, characterized in that the tests conducted on the test platform include the remote loading of a program from the microcomputer into the RAM memory (3) of the test platform.

6. The IC development process of any of claims 1 to 5, characterized in that by simulation or experimentation, a data base of tests and of their results is formed in the microcomputer.

7. The IC development process of claim 6, characterized in that the results obtained from the tests and expected results (stored in the data base) corresponding to either simulations or previous experiments, are compared.

8. The IC development process of any of claims 1 to 7, characterized in that the management software allows activation (deactivation) of test and display points defined in the processing software, display of the contents of memories and main registers of the core of the DSP (or microprocessor) and execution of the software either in or outside real time to validate it.

9. The IC development process of any of claims 1 to 8, characterized in that an interface software allows control of the test platform and chaining of tests of the processing software in automatic fashion in and outside of real time.
